# EUROPÄISCHE PATENTSCHRIFT

(11) **EP 4 392 806 B1**
(45) Veröffentlichungstag und Bekanntmachung des Hinweises auf die Patenterteilung: **28.01.2026**
(21) Anmeldenummer: 22760704.1
(22) Anmeldetag: 01.08.2022
(51) Int. Cl.: G01S 7/521, G01S 15/931

(54) **ULTRASCHALLSENSOR FÜR EIN KRAFTFAHRZEUG**
ULTRASONIC SENSOR FOR A MOTOR VEHICLE
CAPTEUR À ULTRASONS POUR VÉHICULE AUTOMOBILE

(30) Priorität: 23.08.2021 DE 102021121774
(43) Veröffentlichungstag der Anmeldung: 03.07.2024
(73) Patentinhaber: Valeo Schalter und Sensoren GmbH, 74321 Bietigheim-Bissingen (DE)
(72) Erfinder: MAURER, Philipp, 74321 Bietigheim-Bissingen (DE); HAFNER, Bastian, 74321 Bietigheim-Bissingen (DE); KALAYCIYAN, Raffi, 74321 Bietigheim-Bissingen (DE); PALABIYIK, Oezkan, 74321 Bietigheim-Bissingen (DE)
(74) Vertreter: Jauregui Urbahn, Kristian
(86) Internationale Anmeldenummer: PCT/EP2022/071495
(87) Internationale Veröffentlichungsnummer: WO 2023/025524

(56) Entgegenhaltungen:
- AT-B- 191 955
- DE-A1- 102019 216 687

## Beschreibung

Die vorliegende Erfindung betrifft einen Ultraschallsensor für ein Kraftfahrzeug und ein Kraftfahrzeug mit einem derartigen Ultraschallsensor.

Ultraschallsensoren werden in Kraftfahrzeugen eingesetzt, um anhand ausgesendeter Ultraschallimpulse und empfangener Echo-Ultraschallimpulse Informationen über die Umgebung eines Fahrzeugs zu erfassen und Informationen über die Umgebung des Fahrzeugs an ein Parkassistenzsystem, ein Fahrassistenzsystem oder dergleichen zu übermitteln.

Ein Ultraschallsensor weist typischerweise eine Ultraschallmembran zum Senden und Empfangen der Ultraschallimpulse, einen daran angebrachten Schwallwandler, wie beispielsweise ein Piezoelement, und eine Leiterplatte mit einer Treiberschaltung für das Piezoelement auf. Die Treiberschaltung umfasst ein Transformatorelement, das zur Verstärkung der elektrischen Signale für das Piezoelement vorgesehen ist. Das Transformatorelement umfasst eine Spule mit einer Induktivität. Aus diesem Grunde können externe magnetische Störfelder von der Induktivität empfangen werden und ein Störsignal bewirken, das dem Signal des Ultraschallsensors überlagert ist. Besonders ausgeprägt ist dieses Problem bei magnetischen Störfeldern, die mit der gleichen Frequenz schwingen wie die Ultraschallmembran, welche typischerweise im Kilohertzbereich schwingt. Magnetische Störfelder im Kilohertzbereich treten zum Beispiel bei induktiven Ladevorgängen eines Elektrofahrzeugs oder eines Mobiltelefons, das in dem Elektrofahrzeug induktiv geladen wird, durch den Betrieb elektrischer Motoren, durch den Betrieb einer Heizung oder eines Start-Stopp-Motors in einem Fahrzeug auf.

An dem Transformator kann ein zylinderförmiges Schirmblech montiert sein. Das Blech leistet jedoch hauptsächlich Beiträge zur Abschirmung von elektrischer Störfelder und hat nur begrenzten Einfluss auf die magnetische Abschirmung. Zudem muss ein solches Blech aus Gründen des Korrosionsschutzes verzinkt oder vernickelt werden, und seine Montage auf der Leiterplatte ist kompliziert. Daher entstehen hohe Material- und Arbeitskosten.

Die DE 10 2019 216687 A1 beschreibt einen Ultraschallsensor, bei dem ein Störsignalanteil bestimmt wird, indem zwei an einem Messwiderstand abgegriffene Messignale miteinander verglichen werden.

Vor diesem Hintergrund liegt der vorliegenden Erfindung als Aufgabe zugrunde, einen Ultraschallsensor auf verbesserte Weise gegen magnetische Störfelder zu schützen.

Gemäß einem ersten Aspekt wird ein Ultraschallsensor für ein Kraftfahrzeug vorgeschlagen. Der Ultraschallsensor weist auf: eine Gehäusebaugruppe, eine in einer Öffnung der Gehäusebaugruppe angeordnete Ultraschallmembran, ein an der Ultraschallmembran von innen angebrachtes Schallwandlerelement und eine in der Gehäusebaugruppe angeordnete Leiterplatte, auf der eine Treiberschaltung für das Schallwandlerelement montiert ist, wobei die Treiberschaltung ein Transformatorelement aufweist. Die Gehäusebaugruppe des Ultraschallsensors weist eine Schirmwicklung auf, die achsparallel mit einer funktionalen Wicklung des Transformatorelements angeordnet ist und in Reihenschaltung mit der funktionalen Wicklung des Transformatorelements verbunden ist. Ein Wicklungssinn der Kompensationswicklung, ein Wicklungssinn der funktionalen Wicklung des Transformatorelements und eine Polung der Reihenschaltung sind derart eingerichtet, dass in der Kompensationswicklung und in der funktionalen Wicklung Ströme entgegengesetzter Polung induzierbar sind.

Demgemäß kann ein externes magnetisches Störfeld in der Kompensationswicklung einen Strom induzieren, der einen von demselben Störfeld in der funktionalen Wicklung des Transformatorelements induzierten Strom mindestens teilweise kompensiert. Somit kann der Ultraschallsensor vorteilhafterweise gegen externe magnetische Störfelder abgeschirmt sein. Das heißt, der Störeinfluss externer magnetischer Störfelder kann vorteilhafterweise kompensiert werden. Da die Kompensationswicklung und die funktionale Wicklung achsparallel zueinander sind, ist die erzielte Schirm- bzw. Kompensationswirkung vorteilhafterweise maximal für magnetische Störfelder, die in der Öffnungsrichtung der funktionalen Wicklung des Transformatorelements wirken, in welcher dieses, wenn keine Kompensationswicklung vorgesehen wäre, besonders anfällig für Störeinflüsse wäre.

Dadurch, dass die Kompensationswicklung in Reihe mit der funktionalen Wicklung geschaltet ist, liegt eines ihrer Enden auf Masse. Somit kann die Kompensationswicklung auch einen vorteilhaften Beitrag zum Ableiten von elektrischen Störfeldern leisten. Es sind Ausführungsformen denkbar, bei denen auf ein um die funktionelle Wicklung oder um das Transformatorelement angeordnetes Schirmblech ganz verzichtet werden kann.

Das Bereitstellen einer Kompensationswicklung als Bestandteil einer Gehäusebaugruppe führt dazu, dass ein Großteil des Innenraums der Kompensationswicklung leer oder mit Stoffen mit geringer magnetischer Permeabilität (wie ein Verfüllmaterial wie Silikon) gefüllt sein kann und die Induktivität der Kompensationswicklung somit gut an eine Streuinduktivität der funktionalen Wicklung des Transformatorelements angepasst sein kann.

Das Bereitstellen der Kompensationswicklung als Bestandteil der Gehäusebaugruppe bietet zudem den Vorteil einer einfachen und kostengünstigen Montage mit geringem Materialaufwand.

Das Merkmal, wonach "ein Wicklungssinn der Kompensationswicklung, ein Wicklungssinn der funktionalen Wicklung des Transformatorelements und eine Polung der Reihenschaltung derart eingerichtet sind, dass in der Kompensationswicklung und in der funktionalen Wicklung Ströme entgegengesetzter Polung induzierbar sind" kann vorzugsweise dadurch realisiert sein, dass die Kompensationswicklung seriell in Reihe mit der funktionalen Wicklung des Transformatorelements geschaltet ist und einen zu einem Wicklungssinn der funktionalen Wicklung des Transformatorelements entgegengesetzten Wicklungssinn aufweist, oder dadurch, dass die Kompensationswicklung antiseriell in Reihe mit der funktionalen Wicklung des Transformatorelements geschaltet ist und denselben Wicklungssinn aufweist wie die funktionale Wicklung des Transformatorelements.

Unter einer Gehäusebaugruppe ist insbesondere eine Baugruppe aus einem oder mehreren Elementen zu verstehen, die dazu eingerichtet ist, die funktionalen Elemente des Ultraschallsensors, insbesondere die Leiterplatte mit der Treiberschaltung, in ihrem Inneren aufzunehmen. Unter den Elementen der Gehäusebaugruppe können sogenannte Außenelemente Außenflächen aufweisen, die die Außenfläche des Ultraschallsensors definieren. Andere sogenannte Innenelemente der Gehäusebaugruppe können jedoch auch keine Flächen aufweisen, die die Außenfläche des Ultraschallsensors definieren. Es genügt, dass die Leiterplatte im Wesentlichen im Inneren eines von den Elementen der Gehäusebaugruppe umrandeten Raums angeordnet ist. Elemente der Gehäusebaugruppe können vorzugsweise auch dadurch als der Gehäusebaugruppe zugehörig identifiziert werden, dass sie in einem Spritzgussverfahren aus einem Kunststoff hergestellt sind.

Die Kompensationswicklung kann aus einem metallischen, leitenden Element wie vorzugsweise zum Beispiel einem gewöhnlichen Draht ausgebildet sein. Die Kompensationswicklung kann insbesondere in ein Element einer Gehäusebaugruppe integriert - in diesem Fall kann das Element der Gehäusebaugruppe beispielsweise durch Umspritzen der Kompensationswicklung hergestellt werden - oder an einer Fläche eines Elements der Gehäusebaugruppe angebracht sein. Das Element der Gehäusebaugruppe kann insbesondere ein im Wesentlichen ringförmiges oder ein im Wesentlichen hohlzylinderförmiges Element der Gehäusebaugruppe sein. Unter die Definition "im Wesentlichen ringförmig" fällt auch eine Ellipsenform; und unter die Definition "im Wesentlichen hohlzylinderförmig" fällt auch ein Zylinder mit einer elliptischen Grundfläche.

Unter "achsparallel" ist zu verstehen, dass die jeweiligen Achsen parallel zueinander verlaufen, aber nicht notwendigerweise zusammenfallen.

Unter einer "funktionalen Wicklung" des Transformatorelements ist insbesondere diejenige Wicklung (Spule) des Transformatorelements zu verstehen, die den wesentlichen Beitrag zur Transformatorfunktionalität des Transformatorelements leistet. Vorzugsweise ist die funktionale Wicklung beispielsweise eine sekundärseitige Wicklung des Transformatorelements, die auf einen Abschnitt eines ferromagnetischen Magnetkerns gewickelt ist, wobei ferner eine primärseitige Wicklung des Transformatorelements auf einen Abschnitt desselben ferromagnetischen Magnetkerns gewickelt ist.

Das Schallwandlerelement kann ein elektromagnetisches, ein elektrodynamisches, ein elektrostatisches oder vorzugsweise ein piezoelektrisches Element sein, das dazu eingerichtet und angeordnet ist, elektrische Signale in mechanische Schwingungen der Ultraschallmembran zu wandeln und mechanische Schwingungen der Ultraschallmembran in elektrische Signale umzuwandeln.

Gemäß einer Ausführungsform sind die Kompensationswicklung und die funktionale Wicklung koaxial angeordnet.

Demgemäß können magnetische Störfelder besonders gut kompensiert werden.

Unter "koaxial" ist zu verstehen, dass die jeweiligen Achsen zusammenfallen.

Gemäß einer weiteren Ausführungsform sind die Achse der Kompensationswicklung und die Achse der funktionalen Wicklung achsparallel und vorzugsweise koaxial mit einer Achse der Ultraschallmembran angeordnet.

Die Achse der Ultraschallmembran entspricht insbesondere einer Achse, entlang derer der Ultraschallsensor Ultraschallsignale sendet und empfängt bzw. einer Achse, entlang derer eine Amplitude von dem Ultraschallsensor ausgesendeten Ultraschallsignale maximal ist, und kann im Weiteren auch als Achse des Ultraschallsensors bezeichnet werden.

Die Ultraschallmembran ist vorzugsweise kreisförmig oder elliptisch, und demgemäß ist ein Gehäusehauptkörperelement der Gehäusebaugruppe, welche die Öffnung aufweist, in welcher die Ultraschallmembran angeordnet ist, ebenfalls kreisförmig oder elliptisch.

Die Kompensationswicklung kann demgemäß besonders einfach als integriertes Bestandteil der Gehäusebaugruppe ausgebildet werden, indem ein Draht um den Gehäusehauptkörper gewickelt oder der Draht in die kreisförmige oder elliptischen Mantelwandung des Gehäusehauptkörpers, beispielsweise mittels Umspritzens, integriert wird.

Gemäß einer weiteren Ausführungsform weist die Kompensationswicklung eine bis hundert, vorzugsweise fünf bis fünfzig, besonders vorzugsweise fünfzehn bis zwanzig Windungen auf.

Mit den vorgeschlagenen Windungsanzahlen kann die Induktivität der Kompensationswicklung besonders gut an eine Streuimpedanz der funktionalen Wicklung angepasst werden.

Gemäß einer weiteren Ausführungsform ist die funktionale Wicklung des Transformatorelements um einen ferromagnetischen Magnetkern gewickelt. Ein freier Raum zwischen dem Transformatorelement und der Kompensationswicklung ist mit einem oder mehreren diamagnetischen, magnetisch neutralen und/oder paramagnetischen Stoffen gefüllt.

Anders ausgedrückt liegt eine Permeabilität des freien Raums im Bereich von ungefähr eins.

Stoffe mit einer solchen Permeabilität umfassen beispielsweise Luft; Silikonschaum, welcher als Verfüllmasse eingesetzt werden kann; und Kunststoff, welcher als Material für die Gehäusebaugruppe eingesetzt werden kann.

Unter einem "freien Raum" ist derjenige Raum zu verstehen, der nicht von der Leiterplatte, den auf der Leiterplatten montierten Bauelementen der Treiberschaltung und dergleichen, Kontaktierungselementen zum Kontaktieren der Leiterplatte wie Drähten, Metallstiften und dergleichen belegt ist. Der "freie Raum" belegt insbesondere vorzugsweise wenigstens mehr als 80 %, besonders vorzugsweise mehr als 90 % des von der Kompensationswicklung umschlossenen Volumens.

Dadurch, dass die funktionale Wicklung um den ferromagnetischen Magnetkern gewickelt ist, weist die funktionale Wicklung eine vorteilhafte hohe magnetische Induktivität auf. Zudem bilden sich, wenn Strom im Transformator transformiert wird, geschlossene Magnetfeldkreislinien in dem Magnetkern aus, die durch externe magnetische Störfelder nicht oder nur geringfügig gestört werden. Störeinflüsse externer magnetischer Störfelder werden von der funktionalen Wicklung in diesem Fall vorrangig nur durch Streuinduktivitäten empfangen, die an Ecken, Kanten und Fugen des Magnetkerns entstehen können. Diese Streuinduktivitäten können deutlich niedriger, insbesondere eine oder mehrere Zehnerpotenzen niedriger, als die wirksame Induktivität der funktionalen Wicklung sein. Demgemäß genügt es vorzugsweise zur Kompensation der Störeinflüsse, eine Kompensationswicklung mit einer Induktivität bereitzustellen, die an die Streuinduktivität angepasst ist und demgemäß deutlich kleiner als die Wirkinduktivität der funktionalen Wicklung ist. Eine solche Kompensationswicklung mit im Vergleich zu der funktionalen Wicklung geringer Induktivität hat zudem den Vorteil, dass die Kompensationswicklung mit der funktionalen Wicklung des Transformatorelements in Reihe geschaltet sein kann, ohne den Betrieb der funktionalen Wicklung des Transformatorelements zu beeinträchtigen. Dadurch, dass der freie Raum mit Stoffen mit einer Permeabilität im Bereich von ungefähr eins gefüllt ist, wird vorteilhafterweise gerade eine solche Kompensationswicklung mit einer Induktivität erzielt, die niedriger, insbesondere eine oder mehrere Zehnerpotenzen niedrige, als die Induktivität der funktionalen Wicklung des Transformatorelements ist.

Gemäß einer weiteren Ausführungsform ist eine Induktivität der Kompensationswicklung an eine Streuinduktivität der funktionalen Wicklung angepasst ist.

Insbesondere kann die Induktivität der Kompensationswicklung sich um weniger als eine Zehnerpotenz von der Streuinduktivität der funktionalen Wicklung sein. Besondres bevorzugt kann die Induktivität der Kompensationswicklung gleich der Streuinduktivität der funktionalen Wicklung sein.

Demgemäß können von der Streuinduktivität empfangene externe magnetische Störfelder besonders gut oder sogar vollständig kompensiert werden.

Gemäß einer weiteren Ausführungsform ist die Kompensationswicklung durch Umspritzen in ein Außenelement der Gehäusebaugruppe integriert ist.

Demgemäß kann die Gehäusebaugruppe, die die Kompensationswicklung aufweist, vorteilhafterweise in einem einzigen einfachen Arbeitsgang durch Umspritzen einer Drahtwicklung kostensparend und einfach hergestellt werden.

Hierbei kann das Außenelement vorzugsweise in einem Schnitt senkrecht zu der Achse der Kompensationswicklung einen elliptischen oder runden Querschnitt aufweisen. Anders ausgedrückt kann das Außenelement ein hohlzylinderförmiges Element sein.

Unter einem "Außenelement" der Gehäusebaugruppe ist ein Element zu verstehen, dessen Außenfläche mindestens einen Abschnitt einer äußeren bzw. freiliegenden Fläche der Gehäusebaugruppe bildet.

Gemäß einer weiteren Ausführungsform ist das Außenelement der Gehäusebaugruppe ein Gehäusehauptkörper, der einen Raum definiert, in dem die Leiterplatte mit dem Transformatorelement angeordnet ist.

Demgemäß kann vorteilhafterweise die in den Gehäusehauptkörper integrierte Kompensationswicklung in axialer Richtung auf demselben Niveau wie die funktionelle Wicklung des Transformatorelements bereitgestellt werden. Auf diese Weise kann eine besonders gute Kompensationswirkung bei externen magnetischen Störfeldern erzielt werden.

Gemäß einer weiteren Ausführungsform ist das Außenelement der Gehäusebaugruppe ein Überwurfring, der an einer Seite der Gehäusebaugruppe mit der Öffnung mit der Ultraschallmembran auf einen Gehäusehauptkörper der Gehäusebaugruppe, welcher einen Raum definiert, in dem die Leiterplatte mit dem Transformatorelement angeordnet ist, aufgesetzt ist.

Demgemäß ist es möglich, die vorgeschlagene Lehre zu implementieren, indem lediglich der Herstellungsvorgang für den Überwurfring angepasst wird, während die übrigen Elemente der Gehäusebaugruppe, insbesondere ein Gehäusehauptkörper, unverändert bleiben können. Insbesondere können für verschiedene Fahrzeugtypen unterschiedlich geformte Gehäusebaugruppen erforderlich sein, jedoch ist denkbar, dass für die unterschiedlich geformten Gehäusebaugruppen jeweils derselbe Überwurfring verwendet wird. Somit kann die vorgeschlagene Lehre vorteilhaft besonders einfach im Überwurfring implementiert werden.

Gemäß einer weiteren Ausführungsform ist die Kompensationswicklung über einen in die Gehäusebaugruppe eingepressten Metallstift elektrisch mit der Treiberschaltung der Leiterplatte verbunden.

Im Speziellen können in die Gehäusebaugruppe zwei Metallstifte eingepresst sein, die dazu dienen, die Treiberschaltung auf der Leiterplatte mit dem Schallwandlerelement zu kontaktieren. Einer dieser beiden Metallstifte liegt auf Masse und kann für den Anschluss eines Endes der in die Gehäusebaugruppe integrierten Kompensationswicklung mitverwendet werden. Vorschlagsgemäß kann ein dritter Metallstift in die Gehäusebaugruppe eingepresst sein, der einen Kontaktpunkt auf der Leiterplatte kontaktiert, welcher einen Kontaktpunkt der Reihenschaltung zwischen der funktionellen Wicklung und der Kompensationswicklung darstellt. Dieser dritte Metallschrift kann für den Anschluss des anderen Endes der Kompensationswicklung genutzt werden, die in ein Außenelement der Gehäusebaugruppe integriert ist.

Das Einpressen (Press-Fitting) der Metallstifte in die Gehäusebaugruppe kann vorteilhaft für einen festen Sitz der Metallstifte sorgen und Resonanzen vermeiden helfen. Zudem erweist sich das Einpressen von Metallstiften in die Gehäusebaugruppe als ein vorteilhaft einfaches Herstellungs- und Kontaktierungsverfahren.

Gemäß einer weiteren Ausführungsform ist die Kompensationswicklung an einem ringförmigen Innenelement der Gehäusebaugruppe angebracht oder in das ringförmige Innenelement integriert, wobei das ringförmige Innenelement in einen Gehäusehauptkörper der Gehäusebaugruppe eingesetzt ist, der einen Raum definiert, in dem die Leiterplatte mit dem Transformatorelement angeordnet ist.

Demgemäß kann vorteilhaft eine modulare Anordnung erzielt werden, die Flexibilität bei der Herstellung einer Vielzahl von Ultraschallsensoren für eine Vielzahl von herstellerspezifischen Anforderungen bietet. Es können Innenelemente mit daran angebrachter oder daran integrierter Kompensationswicklung hergestellt werden und bei der Fertigung der Ultraschallsensoren je nach Bedarf in den Gehäusehauptkörper eingesetzt werden oder nicht. Unter einem "Innenelement" der Gehäusebaugruppe ist ein Element zu verstehen, das keine Fläche aufweist, die einen Abschnitt einer äußeren bzw. nach außen freiliegenden Fläche der Gehäusebaugruppe bildet.

Gemäß einer weiteren Ausführungsform ist das ringförmige Innenelement der Gehäusebaugruppe formschlüssig in den Gehäusehauptkörper der Gehäusebaugruppe eingepasst.

Demgemäß kann ein fester, vibrationsfreier Sitz des ringförmigen Innenelements in dem Gehäusehauptkörper erreicht werden. Insbesondere kann das ringförmige Innenelement in den Gehäusehauptkörper eingepresst sein.

Gemäß einer weiteren Ausführungsform ist das ringförmige Innenelement durch Vergießen an den Gehäusehauptkörper der Gehäusebaugruppe gefügt.

Insbesondere kann das ringförmige Innenelement mit der daran angebrachten oder darin integrierten Kompensationswicklung vor oder nach Montage der Leiterplatte in dem Gehäusehauptkörper mit Spiel in den Gehäusehauptkörper gelegt werden, und eine mechanische Verbindung zwischen Innenelement und Gehäusehauptkörper kann erst beim Vergießen des Ultraschallsensors ausgebildet werden. Das Vergießen kann beispielsweise mit einer Silikonmasse erfolgen.

Demgemäß ist eine besonders einfache Herstellung des vorgeschlagenen Ultraschallsensors möglich.

Gemäß einer weiteren Ausführungsform ist die Kompensationswicklung über Federkontakte elektrisch mit der Treiberschaltung der Leiterplatte verbunden.

Demgemäß kann ein dritter, in die Gehäusebaugruppe zu verpressender Metallstift eingespart werden, und die elektrische Verbindung kann vorteilhaft über einen im Inneren der Gehäusebaugruppe angeordneten Federkontakt erfolgen.

Gemäß einem zweiten Aspekt wird ein Kraftfahrzeug mit mindestens einem Ultraschallsensor des ersten Aspekts oder einer seiner Ausführungsformen vorgeschlagen.

Die für den Ultraschallsensor des ersten Aspekts beschriebenen Merkmale, Vorteile und Ausführungsformen gelten entsprechend auch für das Kraftfahrzeug des zweiten Aspekts.

Weitere mögliche Implementierungen der Erfindung umfassen auch nicht explizit genannte Kombinationen von zuvor oder im Folgenden bezüglich der Ausführungsbeispiele beschriebenen Merkmalen oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsbeispielen unter Bezugnahme auf die beigefügten Figuren näher erläutert.
- Fig. 1: zeigt eine Frontansicht eines Fahrzeugs;
- Fig. 2: zeigt eine Axialschnittansicht eines Ultraschallsensors gemäß einem ersten Ausführungsbeispiel;
- Fig. 3: zeigt ein Schaltbild eines Abschnitts einer Treiberschaltung gemäß Ausführungsbeispielen;
- Fig. 4: zeigt eine Axialschnittansicht eines Ultraschallsensors gemäß einem zweiten Ausführungsbeispiel; und
- Fig. 5: zeigt eine Axialschnittansicht eines Ultraschallsensors gemäß einem dritten Ausführungsbeispiel.

In den Figuren sind gleiche oder funktionsgleiche Elemente mit denselben Bezugszeichen versehen worden, sofern nichts anderes angegeben ist.

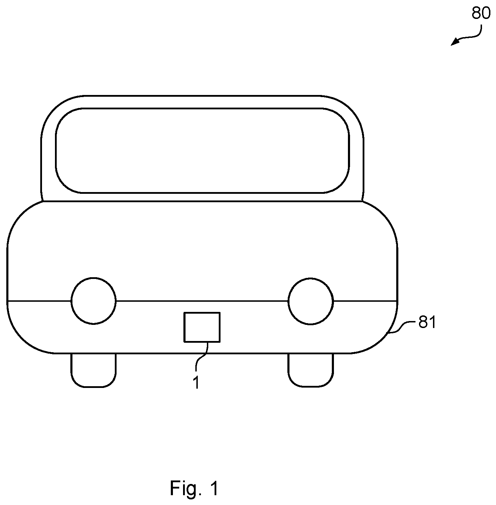

Fig. 1 zeigt eine Frontansicht eines Fahrzeugs 80. An einem Stoßfänger 81 des Fahrzeugs 80 ist ein Ultraschallsensor 1 gemäß Ausführungsbeispielen der vorgeschlagenen Lehre angeordnet. Der Ultraschallsensor 1 sendet Ultraschallsignalimpulse in eine Umgebung des Fahrzeugs 80 aus und empfängt Ultraschallsignalimpulse aus der Umgebung des Fahrzeugs 80. Eine nicht gezeigte Auswerteelektronik gewinnt anhand der Laufzeitdifferenzen zwischen ausgesendeten und empfangenen Ultraschallsignalimpulsen Informationen über die Umgebung des Fahrzeugs.

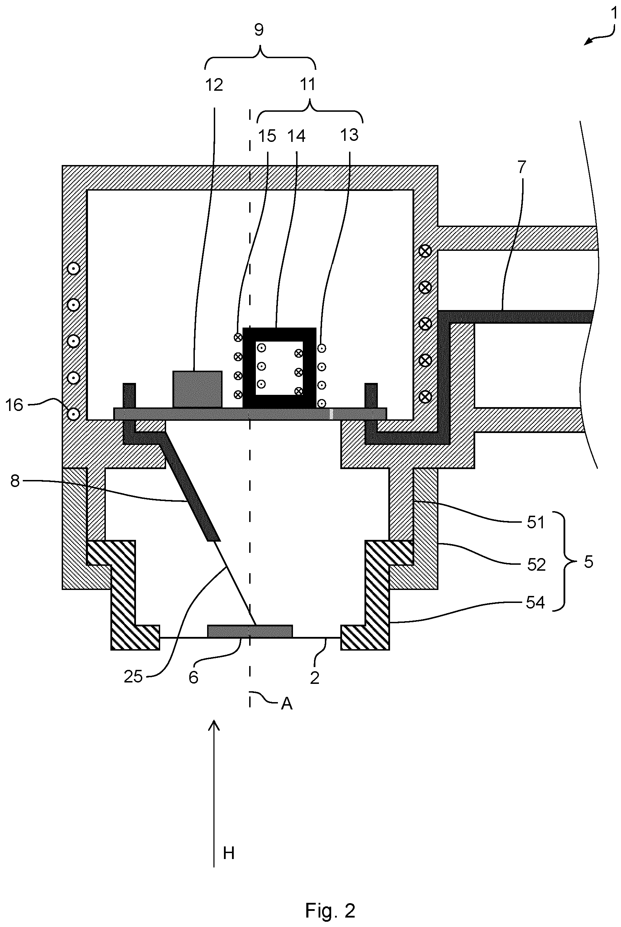

Fig. 2 zeigt eine Axialschnittansicht des Ultraschallsensors 1 gemäß einem ersten Ausführungsbeispiel. Der Ultraschallsensor 1 weist eine Ultraschallmembran 2 auf. Ein Piezoelement 3 (Beispiel für ein Schallwandlerelement) ist von innen an der Ultraschallmembran 2 angebracht. Die Baugruppe aus Ultraschallmembran 2 und Piezoelement 3 ist dazu eingerichtet, Ultraschallimpulssignale entlang einer Achse A des Ultraschallsensors 1 zu senden und zu empfangen. Die Ultraschallmembran 2 mit dem daran angebrachten Piezoelement 3 ist in eine Öffnung eines Membrantopfs 54 eingesetzt. Der Membrantopf 54 ist auf einen Gehäusehauptkörper 51 aufgesetzt und vorzugsweise, beispielsweise mittels Ultraschallschweißens, an diesen gefügt. Über die Fügestelle ist ein Überwurfring 53 auf den Membrantopf 4 und den Gehäusehauptkörper 51 aufgesetzt. Optional kann vorzugsweise ein Dichtungselement (nicht gezeigt) zwischen Überwurfring 52 und Membrantopf 54 angeordnet sein.

Der Gehäusehauptkörper 51, der Membrantopf 54 und der Überwurfring 53 bilden eine Gehäusebaugruppe 5 des Ultraschallsensors 1 des ersten Ausführungsbeispiels aus. In dem von der Gehäusebaugruppe 5 beschriebenen Innenraum ist eine Leiterplatte 6 mit einer Treiberschaltung 9 zum Ansteuern des Piezoelements 3 angeordnet.

Die Treiberschaltung 9 auf der Leiterplatte 6 ist vorzugsweise über mehrere erste Metallstifte 7 mit zu dem Ultraschallsensor 1 externen elektrischen bzw. elektronischen Einrichtungen der Bordelektronik des Fahrzeugs (80 in Fig. 1) elektrisch verbunden. Die mehreren ersten Metallstifte 7 sind vorzugsweise in den Gehäusehauptkörper 51 eingepresst. Vorzugsweise ist die Treiberschaltung 9 der Leiterplatte 6 über mehrere zweite Metallstifte 8 und besonders vorzugsweise einen losen, d.h. nicht gespannten, freien Draht 25, welcher der Vibrationsentkopplung dient, mit dem Piezoelement 3 elektrisch verbunden.

Die Treiberschaltung 9 weist insbesondere ein Transformatorelement 11 sowie ein oder mehrere weitere elektronische Bauelemente 12, wie einen Verstärker, einen ASIC (anwendungsspezifischer integrierter Schaltkreis) und dergleichen auf. Das Transformatorelement 11 weist einen ferromagnetischen Magnetkern 14 auf, um den eine primäre funktionale Wicklung 13 und eine sekundäre funktionale Wicklung 15 gewickelt sind. In den Figuren veranschaulicht ein Kreis mit einem Punkt einen aus der der Blattebene herauslaufenden Draht der jeweiligen funktionalen Wicklung 13, 15, und ein Kreis mit einem Kreuz darin veranschaulicht einen in die Blattebene hineinlaufenden Draht der jeweiligen funktionalen Wicklung 13, 15. Es ist somit veranschaulicht, dass die primäre funktionale Wicklung 13 und die sekundäre funktionale Wicklung 15 einen Wicklungssinn aufweisen, bei dem der Draht der jeweiligen funktionalen Wicklung 13, 15 in Draufsicht (bei Betrachtung von oben in Bezug auf die Zeichnung in axialer Richtung) im Uhrzeigersinn um einen jeweiligen Arm des Magnetkerns 14 gewickelt ist.

Die sekundäre funktionale Wicklung 15 ist auf den ferromagnetischen Magnetkern 14 gewickelt, so dass sich geschlossene Magnetfeldlinien um die sekundäre funktionale Wicklung 15 ausbilden können. Dadurch ist die sekundäre funktionale Wicklung in einem gewissen Maße gegen Störeinflüsse externer Magnetfelder H geschützt. Jedoch kann es bei einem Transformatorelement 11 an Ecken, Spalten und dergleichen auch zur Ausbildung einer gewissen Streuinduktivität kommen. Die Streuinduktivität der sekundären funktionalen Wicklung 15 fungiert als Antenne für externe Störfelder. Das heißt, in der sekundären funktionalen Wicklung 15 können aufgrund ihrer Streuinduktivität Ströme induziert werden, wenn ein magnetisches Wechselfeld H mit mindestens einer Komponente entlang der Achse der sekundären funktionalen Wicklung 15 (im vorliegenden Ausführungsbeispiel identisch mit der Achse A des Ultraschallsensors) auf das Transformatorelement 11 wirkt. Diese Ströme stellen ein unerwünschtes Störsignal dar, das dem gewünschten Sende- oder Empfangssignal überlagert ist.

Jedoch ist gemäß dem ersten Ausführungsbeispiel eine Kompensationswicklung 16 durch Umspritzen oder dergleichen in den Gehäusehauptkörper 51 integriert. Ein Wicklungssinn der Kompensationswicklung 16 ist derart eingerichtet, dass ein Draht der Kompensationswicklung 16 in der Draufsicht gegen den Uhrzeigersinn verläuft. Das heißt, die Kompensationswicklung 16 weist in diesem Ausführungsbeispiel einen zu der sekundären funktionalen Wicklung 15 des Transformatorelements 11 entgegengesetzten Wicklungssinn auf.

Somit kann in der Kompensationswicklung 16 von dem externen magnetischen Wechselfeld H ein Strom induziert werden, der eine der Polung des in der sekundären funktionalen Wicklung 15 induzierten Stroms entgegengesetzte Polung aufweist.

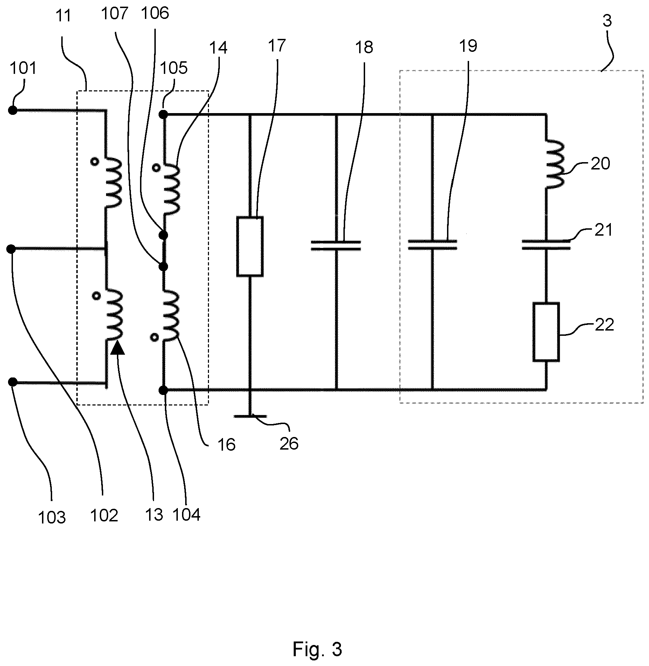

Wie nachstehend in Fig. 3 noch näher erläutert wird, sind die sekundäre funktionale Wicklung 15 und die Kompensationswicklung 16 in Reihe geschaltet. Somit bilden insbesondere die sekundäre funktionale Wicklung 15 und die Kompensationswicklung 16 zusammen die Sekundärwicklung des Transformatorelements 11 aus.

Zur Herstellung der Reihenschaltung kann die Kompensationswicklung 16 beispielsweise auf einer Masseseite mit einem der in den Gehäusehauptkörper 51 eingepressten Metallstifte 8 verbunden sein, der ebenfalls mit Masse (26 in Fig. 3) verbunden ist. Eine andere Seite der Kompensationswicklung 16 kann über einen weiteren, in Fig. 2 nicht veranschaulichten, in den Gehäusehauptkörper 51 eingepressten Metallstift 8 mit der Treiberschaltung 9 und dort mit einem Ende (106 in Fig. 3) der sekundären funktionalen Wicklung 15 verbunden sein.

Demgemäß können vorteilhafterweise die in der Kompensationswicklung 16 und der sekundären funktionalen Wicklung 15 durch dasselbe Magnetfeld H induzierten gegenpoligen Ströme einander zumindest teilweise kompensieren. Somit kann vorteilhafterweise ein Schirmeffekt gegenüber dem externen Magnetfeld H erzielt werden, für den es unerheblich ist, ob das Transformatorelement 11 mit einem Schirmblech oder dergleichen umgeben ist oder nicht.

Gemäß bevorzugten Ausgestaltungen des vorliegenden Ausführungsbeispiels ist die Kompensationswicklung 16 vorzugsweise koaxial mit der sekundären funktionalen Wicklung 15 des Transformatorelements 11 angeordnet, und die gemeinsame Achse der Kompensationswicklung 16 und der sekundären funktionalen Wicklung 15 fällt vorzugsweise mit der Achse A des Gehäusehauptkörpers 51 zusammen. In dem Beispiel in Fig. 2 ist ein Innenraum der Kompensationswicklung 16 - mit Ausnahme des Magnetkerns 11, der nur einen kleinen Anteil des Innenraums der Kompensationswicklung 16 darstellt - im Wesentlichen mit magnetisch neutralen, diamagnetischen oder paramagnetischen Stoffen gefüllt. So kann beispielsweise der nicht von der Leiterplatte 6, der Treiberschaltung 9 und den Metallstiften 7, 89 belegte Innenraum des Gehäusehauptkörpers 51 ganz oder teilweise mit einem Silikonschaum verfüllt sein. Zudem ist vorzugsweise eine Wicklungszahl der Kompensationswicklung 16 niedriger als eine Wicklungszahl der sekundären funktionalen Wicklung 15. Somit kann eine Induktivität der Kompensationswicklung 16 deutlich niedriger als eine gesamte Induktivität der sekundären funktionalen Wicklung 15 sein. Insbesondere kann eine Induktivität der Kompensationswicklung 16 vorzugsweise bestmöglich an eine, beispielsweise durch Messen bestimmte, Streuinduktivität der sekundären funktionalen Wicklung 15 angepasst sein.

Lediglich als ein Beispiel sei erwähnt, dass eine Windungszahl der primären funktionalen Wicklung 13 einige zehn, vorzugsweise zum Beispiel fünfundzwanzig Windungen betragen kann, eine Windungszahl der sekundären funktionalen Wicklung 15 mehrere hundert, vorzugsweise zum Beispiel dreihundert, Windungen betragen kann. Eine Windungszahl der Kompensationswicklung kann im Bereich von fünf bis fünfzig, besonders vorzugsweise im Bereich von fünfzehn bis zwanzig Windungen liegen.

Jede der genannten bevorzugten Ausgestaltungen trägt jeweils dazu bei, den Betrag des in der Kompensationswicklung 16 aufgrund des externen magnetischen Störfelds H induzierten Stroms bestmöglich an den Betrag des in der sekundären funktionalen Wicklung 15 induzierten externen magnetischen Störfelds H anzupassen. Demgemäß können in einer besonders bevorzugten Ausgestaltung die jeweiligen Ströme einander aufheben, und somit kann eine weitgehende oder auch eine vollständige Schirmwirkung gegenüber dem externen magnetischen Störfeld H erzielt werden.

Fig. 3 zeigt ein vereinfachtes Schaltbild eines Abschnitts der Treiberschaltung 9 aus Fig. 2 gemäß Ausführungsbeispielen. Es wird auf Fig. 3 und auch auf Fig. 2 Bezug genommen. Die linke Seite in Fig. 3 bildet eine Primärseite des Transformatorelements 11. Die rechte Seite in Fig. 3 bildet eine Sekundärseite des Transformatorelements 11.

Primärseitig ist in dem Schaltbild aus Fig. 3 ein Punkt 102 mit einer Versorgungsspannung, wie beispielsweise einer gepufferten Batteriespannung, verbunden. Die Punkte 101 und 103 sind über steuerbare Schalter (nicht veranschaulicht) mit Masse 26 verbunden. Im Sendebetrieb werden die mit den Kontakt 101 und 103 verbundenen Schalter abwechselnd ein- und ausgeschaltet, wobei jeweils einer der Schalter eingeschaltet und der andere Schalter ausgeschaltet ist. Auf diese Weise fließt durch jeweils eine der beiden primärseitigen Wicklungen 15 des Transformatorelements 11 abwechselnd in verschiedenen Richtungen ein Strom. Auf diese Weise kann beispielsweise ein abwechselnd positives und negatives Rechtecksignal an die Primärseite des Transformatorelements 11 angelegt werden.

Auf der Sekundärseite des Transformatorelements 11 ist die sekundäre funktionale Wicklung 13 zwischen den Punkten 105 und 106 angeordnet. Die sekundäre funktionale Wicklung 15 weist eine höhere, beispielsweise um mindestens Faktor 10 höhere, Windungszahl auf als jede der primären funktionalen Wicklungen 13. Die sekundäre funktionale Wicklung 15 und die primären funktionalen Wicklungen 13 sind auf einen selben ferromagnetischen Magnetkern 14 gewickelt. Demgemäß dient das Transformatorelement 11 zum Hochtransformieren des über die Punkte 101, 102, 103 angelegten Sendesignals, dessen Spannung durch die Versorgungsspannung am Punkt 102 vorgegeben ist, auf eine für das Piezoelement 3 erforderliche Betriebsspannung. Zudem wird das primärseitig angelegte Rechtecksignal vorzugsweise sekundärseitig in ein Sinussignal gewandelt.

Die Kapazität 18 und der Widerstand 17 bilden einen Tuner aus, der im Sendebetrieb zur Dämpfung der durch einen primärseitig angelegten Rechteckimpuls angeregten Schwingung auf der Sekundärseite dient.

Die Induktivität 20, die Kapazität 21 und der Widerstand 23 bilden ein Ersatzschaltbild für die Piezomechanik (nicht dargestellt) des Piezoelements 3. Die Kapazität 19 repräsentiert die Kapazität einer zweiseitig metallisierten Piezoscheibe (nicht dargestellt) des Piezoelements 3.

Im Empfangsbetrieb sind mindestens die Punkte 101 und 103 offen. Im Empfangsbetrieb dient der Tuner 17, 18 zur Impedanzanpassung der von dem Piezoelement 3, 19, 20, 21, 22 empfangenen Empfangssignale. Ein in Fig. 3 nicht veranschaulichter Verstärker mit den Kontakten 104 und 105 verbunden und ermöglicht nach Aussenden eines Ultraschallimpulses im Sendebetrieb das Empfangen von aus einer Umgebung des Fahrzeugs (80 in Fig 1) empfangenen Echoimpulsen.

Die Punkte 101, 102 und 103 können insbesondere beispielsweise mit einem nicht veranschaulichten ASIC, der als eines der Bauelemente 12 der Treiberschaltung 9 auf der Leiterplatte 6 installiert ist, elektrisch verbunden sein und von dem ASIC gesteuert werden. Der ASIC kann seinerseits über die Metallstifte 7 mit externen Elementen der Bordelektronik des Fahrzeugs (80 in Fig. 1) verbunden sein.

Auf der Sekundärseite ist die Kompensationswicklung 16 zwischen den Punkten 104 und 107 seriell in Reihe mit der sekundären funktionalen Wicklung 15 zwischen den Punkten 105 und 106 geschaltet. Punkt 107 liegt dabei auf Masse 26. Die Kompensationswicklung 16 weist einen Wicklungssinn auf, der dem Wicklungssinn der sekundären funktionalen Wicklung 15 entgegengesetzt ist. Demgemäß können, wie vorstehend bereits anhand von Fig. 2 erläutert wurde, Störströme, die von einem externen magnetischen Störfeld H über eine Streuinduktivität der sekundären funktionalen Wicklung 15 empfangen werden, vorteilhafterweise teilweise oder vollständig kompensiert werden. Somit kann die Signalqualität des ausgesendeten Ultraschallsignals verbessert und demgemäß vorteilhafterweise eine noch präzisere Umfassung der Umgebung des Fahrzeugs (80 in Fig. 1) ermöglicht werden.

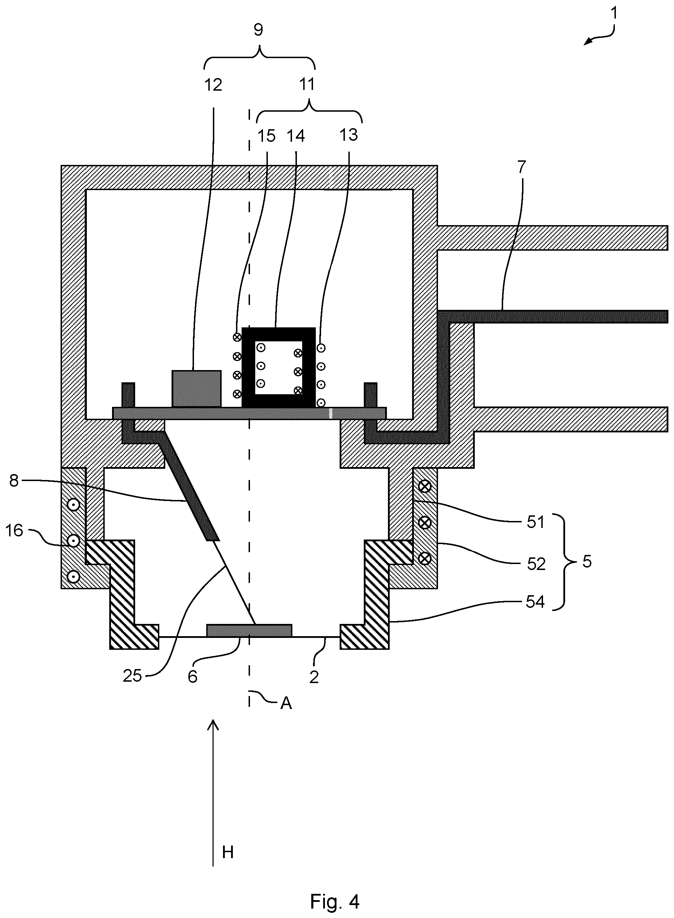

Fig. 4 zeigt eine Axialschnittansicht des Ultraschallsensors 1 gemäß einem zweiten Ausführungsbeispiel. Gemäß dem zweiten Ausführungsbeispiel ist die Kompensationswicklung 16 nicht in dem Gehäusehauptkörper 51, sondern in dem Überwurfring 52 ausgebildet. Auf diese Weise ist es besonders einfach, bei der Herstellung durch Wahl eines Überwurfrings 52 mit Kompensationswicklung 16 oder eines Überwurfrings 52 ohne Kompensationswicklung einen Ultraschallsensor 1 wahlweise mit der zusätzlichen Kompensation von magnetischen Störfeldern der vorgeschlagenen Lehre auszustatten oder nicht. Wenn ein Überwurfring ohne Kompensationswicklung verwendet wird können die Punkte 104 und 107 durch Löten, mit einer Brücke oder dergleichen kurzgeschlossen werden. Die übrigen Vorteile, Merkmale und vorteilhaften Ausgestaltungen, die beim ersten Ausführungsbeispiel beschrieben wurden, gelten auch für das zweite Ausführungsbeispiel. Insbesondere haben Versuche der Erfinder gezeigt, dass sich eine vorteilhafte Kompensationswirkung auch dann einstellen kann, wenn sich die Kompensationswicklung 16 entlang der Achse A nicht auf derselben Höhe befindet wie die funktionale sekundäre Wicklung 15.

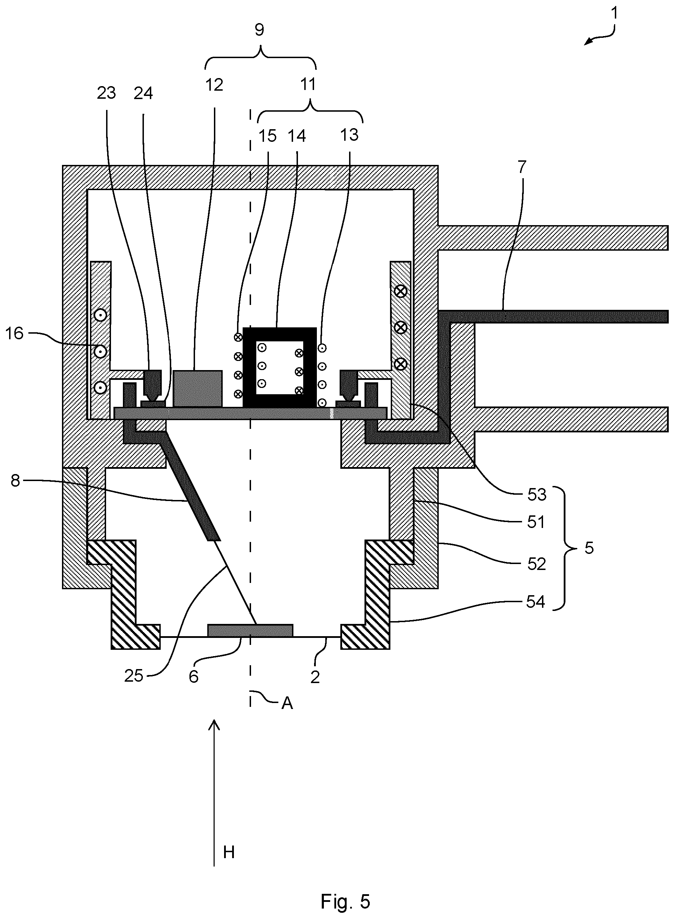

Fig. 5 zeigt eine Axialschnittansicht des Ultraschallsensors 1 gemäß einem dritten Ausführungsbeispiel. Die Gehäusebaugruppe 5 des Ultraschallsensors 1 des dritten Ausführungsbeispiels weist neben dem Gehäusehauptkörper 51 und dem Überwurfring 52 und dem Membrantopf 54 ferner einen in den Gehäusehauptkörper 51 eingesetzten Ringträger 53 (Beispiel für ein Innenelement der Gehäusebaugruppe) auf. Gemäß dem dritten Ausführungsbeispiel ist die Kompensationswicklung 16 durch Umspritzen oder dergleichen in den Ringträger 53 integriert. Es sei angemerkt, dass der Ringträger 53 aus einem selben oder einem ähnlichen Kunststoffmaterial wie der Gehäusehauptkörper 51 ausgebildet sein kann und, genau wie der Gehäusehauptkörper 51, einen Raum definiert, in dem die Leiterplatte 6 mit dem Transformatorelement 11 angeordnet ist. Deswegen kann vorzugsweise auch der Ringträger 53 als Element der Gehäusebaugruppe 5 gelten.

Eine elektrische Verbindung der Kompensationswicklung 16 des Ringträgers 53 mit der Treiberschaltung 9 kann vorzugsweise über einen jeweiligen Federkontakt 23 hergestellt sein, der mit einer jeweiligen entsprechenden Kontaktfläche 24 auf der Leiterplatte 6 elektrisch verbunden ist.

Der Ringträger 53 kann formschlüssig in den Gehäusehauptkörper 51 eingesetzt und dadurch an diesen gefügt sein.

Alternativ hierzu kann der Ringträger 53 auch mit Spiel in den Gehäusekörper 51 eingesetzt sein, und eine mechanische Verbindung zwischen dem Ringträger 53 und dem Gehäusekörper 61 kann beim Vergießen des Inneren des Ultraschallsensors 1 mit einer Vergussmasse, wie beispielsweise Silikonschaum, hergestellt werden. Ein solches Vergießen kann auch aus Gründen der besseren Vibrationsdämmung erfolgen. Die Herstellung eines vorschlagsgemäßen Ultraschallsensors 1 kann demgemäß besonders einfach sein. Auch der Ringträger 53 gemäß dem dritten Ausführungsbeispiel ermöglicht es, auf einfache Weise durch Vorsehen oder Weglassen des Ringträgers 53 (im letzteren Falle können die Kontaktflächen 24 kurzgeschlossen werden) einen Ultraschallsensor 1 wahlweise mit der zusätzlichen Kompensation von magnetischen Störfeldern der vorgeschlagenen Lehre auszustatten oder nicht. Die übrigen Vorteile, Merkmale und vorteilhaften Ausgestaltungen, die beim ersten oder zweiten Ausführungsbeispiel beschrieben wurden, gelten auch für das dritte Ausführungsbeispiel entsprechend.

Obwohl die vorliegende Erfindung anhand von Ausführungsbeispielen beschrieben wurde, ist sie vielfältig modifizierbar.

Als Kraftfahrzeug 80 wurde rein beispielhaft ein Personenkraftwagen veranschaulicht. Der vorgeschlagene Ultraschallsensor, die vorgeschlagene Anordnung und das vorgeschlagene Entkopplungselement finden jedoch auch bei anderen fahrenden bzw. verfahrbaren Objekten Anwendung, die über ein Fahrassistenzsystem, ein Parkassistenzsystem und/oder ein System zum teil- oder vollautonomen Fahren verfügen, wie beispielsweise bei Lastkraftwagen, Gabelstapeln, Robotern, und dergleichen mehr.

Der Ultraschallsensor 1 ist in Fig. 1 rein beispielhaft an einem Stoßfänger 81 des Kraftfahrzeugs 80 angeordnet. Der Ultraschallsensor 1 kann auch an einem anderen Bauteil einer Außenhülle des Kraftfahrzeugs 80 angeordnet sein. Vorzugsweise sind mehrere Ultraschallsensoren 1 rings um einen Perimeter des Kraftfahrzeugs 80 angeordnet. Ferner kann der Ultraschallsensor 1 auch an einer Innverkleidung des Kraftfahrzeugs 80 angeordnet sein und zum Vermessen des Innenraums des Kraftfahrzeugs 80 dienen, beispielsweise um zu erkennen, ob und wie viele Fahrgäste sich in dem Kraftfahrzeug 80 aufhalten.

Es wurden Ausführungsbeispiele beschrieben, bei denen die Kompensationswicklung 16 und die sekundäre funktionale Wicklung 15 des Transformatorelements 11 einen entgegengesetzten Wicklungssinn aufweisen und seriell in Reihe geschaltet sind. Denkbar ist jedoch auch, dass die Kompensationswicklung 16 und die sekundäre funktionale Wicklung 16 einen identischen Wicklungssinn aufweisen und antiseriell in Reihe geschaltet sind.

In den Ausführungsbeispielen ist die Kompensationswicklung 16 durch Umspritzen in ein jeweiliges Element der Gehäusebaugruppe 5 integriert. Denkbar ist jedoch auch, dass die Kompensationswicklung 16 an einer Innenoberfläche oder an einer Außenoberfläche des jeweiligen Elements der Gehäusebaugruppe 5 angebracht ist.

In den Ausführungsbeispielen sind Impedanz und Anordnung der Kompensationswicklung 16 gewählt, um Störeinflüsse eines externen magnetischen Störfelds H auf eine funktionale sekundäre Wicklung des Transformatorelements 11 zu kompensieren. In den gezeigten Ausführungsbeispielen ist der Störeinfluss an der sekundären funktionalen Wicklung 15 am größten. Es ist jedoch auch denkbar, beispielsweise bei einem anderen Schaltbild als dem in Fig. 3 gezeigten, andere Wicklungen des Transformatorelements 11 zu betrachten. Die vorgeschlagene Lehre betrifft generell das Kompensieren von magnetischen Störeinflüssen in beliebigen funktionalen Wicklungen eines Transformatorelements 11 eines Ultraschallsensors 1.

In den Ausführungsbeispielen fallen die Kompensationswicklung 16, die sekundäre funktionale Wicklung 15 und die Achse A des Ultraschallsensors (des Gehäusehauptkörpers 51) zusammen. Es sind jedoch aus Ausgestaltungen denkbar, bei denen mindestens zwei der genannten Achsen nicht zusammenfallen, sondern achsparallel zueinander angeordnet sind. Insbesondere genügt es, wenn eine Achse der Kompensationswicklung 16 im Wesentlichen achsparallel zu einer Achse der sekundären funktionalen Wicklung 15 ist. Hinsichtlich einer Orientierung der parallelen Achsen der sekundären funktionalen Wicklung 15 und der Kompensationswicklung 16 gegenüber der Achse A der Ultraschallmembran bzw. des Ultraschallsensors besteht keine Einschränkung.

Es wurde hauptsächlich die Entstörwirkung gegenüber dem externen magnetischen Störfeld H beschrieben, das in axialer Richtung einfällt. Da die Kompensationsspule 16 jedoch eine gewisse Abmessung in der axialen Richtung aufweist, kann die Kompensationsspule 16 vorteilhaft auch einen Beitrag dazu leisten, Störeinträge eines elektrischen Störfeldes, das in einer radialen Richtung auf den Ultraschallsensor einwirkt, gegen Masse 26 abzuleiten.

### BEZUGSZEICHENLISTE

- 1: Ultraschallsensor
- 2: Ultraschallmembran
- 3: Schallwandlerelement, Piezoelement
- 5: Gehäusebaugruppe
- 6: Leiterplatte
- 7: Metallstift
- 8: Metallstift
- 9: Treiberschaltung
- 11: Transformatorelement
- 12: elektronische Bauelemente
- 13: primäre funktionale Wicklung
- 14: ferromagnetischer Magnetkern
- 15: sekundäre funktionale Wicklung
- 16: Kompensationswicklung
- 17: Tunerwiderstand
- 18: Tunerkapazität
- 19: Kapazität der Piezoscheibe
- 20: Induktivität im Ersatzschaltbild der Piezomechanik
- 21: Kapazität im Ersatzschaltbild der Piezomechanik
- 22: Widerstand im Ersatzschaltbild der Piezomechanik
- 23: Federkontakt
- 24: Kontaktfläche
- 25: ungespannter Draht
- 26: Masse
- 51: Gehäusehauptkörper, Außenelement
- 52: Überwurfring, Außenelement
- 53: Ringträger, Innenelement
- 54: Membrantopf
- 80: Kraftfahrzeug
- 81: Stoßfänger
- 101-107: Punkte im Schaltbild
- A: Achse der Ultraschallmembran, Achse des Ultraschallsensors
- H: Magnetfeld, externes magnetisches Störfeld

## Patentansprüche

1. Ultraschallsensor (1) für ein Kraftfahrzeug (80), wobei der Ultraschallsensor (1) aufweist:
eine Gehäusebaugruppe (5), eine in einer Öffnung der Gehäusebaugruppe (5) angeordnete Ultraschallmembran (2), ein an der Ultraschallmembran (2) von innen angebrachtes Schallwandlerelement (3) und eine in der Gehäusebaugruppe (5) angeordnete Leiterplatte (6), auf der eine Treiberschaltung (9) für das Schallwandlerelement (3) montiert ist, wobei die Treiberschaltung (9) ein Transformatorelement (11) aufweist,
**dadurch gekennzeichnet,**
**dass** die Gehäusebaugruppe (5) des Ultraschallsensors (1) eine Kompensationswicklung (16) aufweist, die achsparallel mit einer funktionalen Wicklung (15) des Transformatorelements (11) angeordnet ist und in Reihenschaltung mit der funktionalen Wicklung (15) des Transformatorelements (11) verbunden ist,
**dass** ein Wicklungssinn der Kompensationswicklung (16), ein Wicklungssinn der funktionalen Wicklung (15) des Transformatorelements und eine Polung der Reihenschaltung derart eingerichtet sind, dass in der Kompensationswicklung (16) und in der funktionalen Wicklung (15) Ströme entgegengesetzter Polung induzierbar sind, und
**dass** ein externes magnetisches Störfeld in der Kompensationswicklung (16) einen Strom induziert, der einen von demselben Störfeld in der funktionalen Wicklung (15) des Transformatorelements (11) induzierten Strom mindestens teilweise kompensiert.

2. Ultraschallsensor nach Anspruch 1,
wobei die Kompensationswicklung (16) und die funktionale Wicklung (15) koaxial angeordnet sind.

3. Ultraschallsensor nach Anspruch 1 oder 2,
wobei die Achse der Kompensationswicklung (16) und die Achse der funktionalen Wicklung (15) achsparallel und vorzugsweise koaxial mit einer Achse (A) der Ultraschallmembran (2) angeordnet sind.

4. Ultraschallsensor nach einem der vorhergehenden Ansprüche,
wobei die Kompensationswicklung (16) eine bis hundert, vorzugsweise fünf bis fünfzig, besonders vorzugsweise fünfzehn bis zwanzig Windungen aufweist.

5. Ultraschallsensor nach einem der vorhergehenden Ansprüche,
wobei die funktionale Wicklung (15) des Transformatorelements (11) um einen ferromagnetischen Magnetkern (13) gewickelt ist und ein freier Raum zwischen dem Transformatorelement (11) und der Kompensationswicklung (16) mit einem oder mehreren diamagnetischen, magnetisch neutralen und/oder paramagnetischen Stoffen gefüllt ist.

6. Ultraschallsensor nach einem der vorhergehenden Ansprüche,
wobei eine Induktivität der Kompensationswicklung (16) an eine Streuinduktivität der funktionalen Wicklung (15) angepasst ist.

7. Ultraschallsensor nach einem der vorhergehenden Ansprüche,
wobei die Kompensationswicklung (16) durch Umspritzen in ein Außenelement (51, 52) der Gehäusebaugruppe (5) integriert ist.

8. Ultraschallsensor nach Anspruch 7,
wobei das Außenelement der Gehäusebaugruppe (5) ein Gehäusehauptkörper (51) ist, der einen Raum definiert, in dem die Leiterplatte (6) mit dem Transformatorelement (1) angeordnet ist.

9. Ultraschallsensor nach Anspruch 7,
wobei das Außenelement der Gehäusebaugruppe (5) ein Überwurfring (52) ist, der an einer Seite der Gehäusebaugruppe (5) mit der Öffnung mit der Ultraschallmembran (2) auf einen Gehäusehauptkörper (51) der Gehäusebaugruppe, welcher einen Raum definiert, in dem die Leiterplatte (6) mit dem Transformatorelement (11) angeordnet ist, aufgesetzt ist.

10. Ultraschallsensor nach einem der Ansprüche 7 bis 9,
wobei die Kompensationswicklung (16) über einen in die Gehäusebaugruppe (5) eingepressten Metallstift (8) elektrisch mit der Treiberschaltung (9) der Leiterplatte (6) verbunden ist.

11. Ultraschallsensor nach einem der Ansprüche 1 bis 6,
wobei die Kompensationswicklung (16) an einem ringförmigen Innenelement (53) der Gehäusebaugruppe angebracht oder in das ringförmige Innenelement (53) integriert ist, wobei das ringförmige Innenelement (53) in einen Gehäusehauptkörper (51) der Gehäusebaugruppe (5) eingesetzt ist, der einen Raum definiert, in dem die Leiterplatte (6) mit dem Transformatorelement (11) angeordnet ist.

12. Ultraschallsensor nach Anspruch 11,
wobei das ringförmige Innenelement (53) der Gehäusebaugruppe (5) formschlüssig in den Gehäusehauptkörper (51) der Gehäusebaugruppe (5) eingepasst ist.

13. Ultraschallsensor nach Anspruch 11,
wobei das ringförmige Innenelement (53) durch Vergießen an den Gehäusehauptkörper (51) der Gehäusebaugruppe (5) gefügt ist.

14. Ultraschallsensor nach einem der Ansprüche 11 bis 13,
wobei die Kompensationswicklung (16) über Federkontakte (23) elektrisch mit der Treiberschaltung (9) der Leiterplatte (11) verbunden ist.

15. Kraftfahrzeug (80) mit mindestens einem Ultraschallsensor (1) nach einem der Ansprüche 1 bis 14.

## Claims

1. Ultrasonic sensor (1) for a motor vehicle (80), wherein the ultrasonic sensor (1) has:
a housing assembly (5), an ultrasonic membrane (2) arranged in an opening of the housing assembly (5), an acoustic transducer element (3) attached to the ultrasonic membrane (2) from the inside and a printed circuit board (6) which is arranged in the housing assembly (5) and on which a driver circuit (9) for the acoustic transducer element (3) is mounted, wherein the driver circuit (9) has a transformer element (11), **characterized**
**in that** the housing assembly (5) of the ultrasonic sensor (1) has a compensation winding (16) which is arranged axially parallel with a functional winding (15) of the transformer element (11) and is connected in series with the functional winding (15) of the transformer element (11),
**in that** a winding direction of the compensation winding (16), a winding direction of the functional winding (15) of the transformer element and a polarity of the series connection are set up in such a way that currents of opposite polarity can be induced in the compensation winding (16) and in the functional winding (15), and
**in that** an external magnetic interference field induces a current in the compensation winding (16), which at least partially compensates for a current induced by the same interference field in the functional winding (15) of the transformer element (11).

2. Ultrasonic sensor according to Claim 1,
wherein the compensation winding (16) and the functional winding (15) are arranged coaxially.

3. Ultrasonic sensor according to Claim 1 or 2,
wherein the axis of the compensation winding (16) and the axis of the functional winding (15) are arranged axially parallel and preferably coaxially with an axis (A) of the ultrasonic membrane (2).

4. Ultrasonic sensor according to one of the preceding claims,
wherein the compensation winding (16) has one to one hundred, preferably five to fifty, particularly preferably fifteen to twenty turns.

5. Ultrasonic sensor according to one of the preceding claims,
wherein the functional winding (15) of the transformer element (11) is wound around a ferromagnetic magnet core (13) and a free space between the transformer element (11) and the compensation winding (16) is filled with one or more diamagnetic, magnetically neutral and/or paramagnetic substances.

6. Ultrasonic sensor according to one of the preceding claims,
wherein an inductance of the compensation winding (16) is adapted to a leakage inductance of the functional winding (15).

7. Ultrasonic sensor according to one of the preceding claims,
wherein the compensation winding (16) is integrated into an outer element (51, 52) of the housing assembly (5) by overmoulding.

8. Ultrasonic sensor according to Claim 7,
wherein the outer element of the housing assembly (5) is a housing main body (51) which defines a space in which the printed circuit board (6) with the transformer element (1) is arranged.

9. Ultrasonic sensor according to Claim 7,
wherein the outer element of the housing assembly (5) is a retaining ring (52), which is placed on one side of the housing assembly (5) with the opening with the ultrasonic membrane (2) on a housing main body (51) of the housing assembly, which defines a space in which the printed circuit board (6) with the transformer element (11) is arranged.

10. Ultrasonic sensor according to one of Claims 7 to 9,
wherein the compensation winding (16) is electrically connected to the driver circuit (9) of the printed circuit board (6) via a metal pin (8) press-fitted into the housing assembly (5).

11. Ultrasonic sensor according to one of Claims 1 to 6,
wherein the compensation winding (16) is attached to an annular inner element (53) of the housing assembly or integrated into the annular inner element (53), wherein the annular inner element (53) is inserted into a housing main body (51) of the housing assembly (5), which defines a space in which the printed circuit board (6) with the transformer element (11) is arranged.

12. Ultrasonic sensor according to Claim 11,
wherein the annular inner element (53) of the housing assembly (5) is form-fitted into the housing main body (51) of the housing assembly (5).

13. Ultrasonic sensor according to Claim 11,
wherein the annular inner element (53) is joined to the housing main body (51) of the housing assembly (5) by potting.

14. Ultrasonic sensor according to one of Claims 11 to 13,
wherein the compensation winding (16) is electrically connected to the driver circuit (9) of the printed circuit board (11) via spring contacts (23).

15. Motor vehicle (80) with at least one ultrasonic sensor (1) according to one of Claims 1 to 14.

## Revendications

1. Capteur à ultrasons (1) pour un véhicule automobile (80), le capteur à ultrasons (1) possédant :
un sous-ensemble boîtier (5), une membrane à ultrasons (2) disposée dans une ouverture du sous-ensemble boîtier (5), un élément transducteur acoustique (3) attaché depuis l'intérieur à la membrane à ultrasons (2) et une carte de circuit imprimé (6) disposée dans le sous-ensemble boîtier (5), sur laquelle est monté un circuit d'attaque (9) pour l'élément transducteur acoustique (3), le circuit d'attaque (9) possédant un élément transformateur (11),
**caractérisé en ce**
**que** le sous-ensemble boîtier (5) du capteur à ultrasons (1) possède un enroulement de compensation (16) qui est disposé parallèlement à l'axe d'un enroulement fonctionnel (15) de l'élément transformateur (11) et qui est relié en un circuit série à l'enroulement fonctionnel (15) de l'élément transformateur (11),
**qu'**un sens d'enroulement de l'enroulement de compensation (16), un sens d'enroulement de l'enroulement fonctionnel (15) de l'élément transformateur et une polarité du circuit série sont conçus de telle sorte que des courants de polarité opposée peuvent être induits dans l'enroulement de compensation (16) et dans l'enroulement fonctionnel (15), et
**qu'**un champ parasite magnétique externe induit, dans l'enroulement de compensation (16), un courant qui compense au moins partiellement un courant induit par le même champ parasite dans l'enroulement fonctionnel (15) de l'élément transformateur (11).

2. Capteur à ultrasons selon la revendication 1, l'enroulement de compensation (16) et l'enroulement fonctionnel (15) étant disposés de manière coaxiale.

3. Capteur à ultrasons selon la revendication 1 ou 2, l'axe de l'enroulement de compensation (16) et l'axe de l'enroulement fonctionnel (15) étant disposés parallèlement à l'axe et de préférence de manière coaxiale à un axe (A) de la membrane à ultrasons (2).

4. Capteur à ultrasons selon l'une des revendications précédentes,
l'enroulement de compensation (16) possédant de un à cent, de préférence de cinq à cinquante, et de manière particulièrement préférée de quinze à vingt spires.

5. Capteur à ultrasons selon l'une des revendications précédentes,
l'enroulement fonctionnel (15) de l'élément transformateur (11) étant enroulé autour d'un noyau magnétique ferromagnétique (13) et un espace libre entre l'élément transformateur (11) et l'enroulement de compensation (16) étant rempli d'une ou plusieurs substances diamagnétiques, magnétiquement neutres et/ou paramagnétiques.

6. Capteur à ultrasons selon l'une des revendications précédentes,
une inductance de l'enroulement de compensation (16) étant adaptée à une inductance de fuite de l'enroulement fonctionnel (15).

7. Capteur à ultrasons selon l'une des revendications précédentes,
l'enroulement de compensation (16) étant intégré dans un élément extérieur (51, 52) du sous-ensemble boîtier (5) par surmoulage.

8. Capteur à ultrasons selon la revendication 7, l'élément extérieur du sous-ensemble boîtier (5) étant un corps principal de boîtier (51) qui définit un espace dans lequel est disposée la carte de circuit imprimé (6) avec l'élément transformateur (1).

9. Capteur à ultrasons selon la revendication 7, l'élément extérieur du sous-ensemble boîtier (5) étant une bague d'accouplement (52) qui est placée sur un côté du sous-ensemble boîtier (5) avec l'ouverture pourvue de la membrane à ultrasons (2) sur un corps principal de boîtier (51) du sous-ensemble boîtier, lequel définit un espace dans lequel est disposée la carte de circuit imprimé (6) avec l'élément transformateur (11).

10. Capteur à ultrasons selon l'une des revendications 7 à 9,
l'enroulement de compensation (16) étant relié électriquement au circuit d'attaque (9) de la carte de circuit imprimé (6) par le biais d'une broche métallique (8) enfoncée dans le sous-ensemble boîtier (5).

11. Capteur à ultrasons selon l'une des revendications 1 à 6,
l'enroulement de compensation (16) étant attaché à un élément intérieur annulaire (53) du sous-ensemble boîtier ou intégré dans l'élément intérieur annulaire (53), l'élément intérieur annulaire (53) étant inséré dans un corps principal de boîtier (51) du sous-ensemble boîtier (5) qui définit un espace dans lequel est disposée la carte de circuit imprimé (6) avec l'élément transformateur (11).

12. Capteur à ultrasons selon la revendication 11, l'élément intérieur annulaire (53) du sous-ensemble boîtier (5) étant emboîté par complémentarité de forme dans le corps principal de boîtier (51) du sous-ensemble boîtier (5).

13. Capteur à ultrasons selon la revendication 11, l'élément intérieur annulaire (53) étant joint par moulage au corps principal de boîtier (51) du sous-ensemble boîtier (5).

14. Capteur à ultrasons selon l'une des revendications 11 à 13,
l'enroulement de compensation (16) étant relié électriquement au circuit d'attaque (9) de la carte de circuit imprimé (11) par le biais de contacts à ressort (23).

15. Véhicule automobile (80) comprenant au moins un capteur à ultrasons (1) selon l'une des revendications 1 **à 14.**
